# EUROPÄISCHE PATENTSCHRIFT

(11) **EP 2 166 235 B1**
(45) Veröffentlichungstag und Bekanntmachung des Hinweises auf die Patenterteilung: **12.10.2011**
(21) Anmeldenummer: 09168458.9
(22) Anmeldetag: 24.08.2009
(51) Int. Cl.: F16B 12/20, F16B 5/00

(54) **Verbindungselement und Verfahren zum Befestigen wenigstens zweier Bauteile aneinander**
Connection element and method for attaching at least two components to another
Elément de liaison et procédé de fixation d'au moins deux composants l'un sur l'autre

(30) Priorität: 23.09.2008 DE 102008048473
(43) Veröffentlichungstag der Anmeldung: 24.03.2010
(73) Patentinhaber: SIEMENS AKTIENGESELLSCHAFT, 80333 München (DE)
(72) Erfinder: Müller, Gerhard, 93492, Treffelstein (DE)

(56) Entgegenhaltungen:
- EP-A1- 0 036 653
- GB-A- 1 004 804
- US-A- 3 705 442
- US-A- 5 228 816

## Beschreibung

Die vorliegende Erfindung betrifft ein Verbindungselement zum Befestigen wenigstens zweier Bauteile aneinander. Darüber hinaus betrifft die vorliegende Erfindung ein Verfahren zum Befestigen wenigstens zweier Bauteile mittels eines Verbindungselementes aneinander.

Es sind verschiedene Verbindungselemente bekannt, die ermöglichen zwei oder mehr Bauteile, wie beispielsweise Platten oder Schrankwände, miteinander fest zu verbinden. Aus der US 5, 228, 816 A ist ein Verbindungselement bekannt. Eine klassische Verbindung stellt eine Schrauben-Mutter-Verbindung dar. Hierbei ist erforderlich, dass Zugang zu beiden Seiten der aneinanderzufügenden Bauteile besteht. In dem Fall, dass eine Seite der aneinanderzufügenden Bauteile nicht zugänglich ist, sind Schrauben-Mutter-Verbindungen nicht einsetzbar. Ferner sind beispielsweise Hohlraumdübel bekannt. Durch einen Hohlraumdübel können zwei Bauteile aneinander befestigt werden, indem der Dübel durch fluchtend angeordnete Öffnungen in den Bauteilen eingeschoben wird und anschließend eine Schraube in den Dübel eingeschraubt wird. Durch die spezielle Ausgestaltung des Hohlraumdübels legt sich dieser beim Einschrauben der Schrauben an die Bauteile an und fixiert so im Zusammenspiel mit der Schraube die Bauteile aneinander. Nachteilig bei einem Hohlraumdübel ist die relativ aufwendige Befestigung der Schrauben in dem Hohlraumdübel. Ein Monteur benötigt beide Hände, um die Schraube in den Hohlraumdübel einzuschrauben. Ferner wird zusätzliches Werkzeug, wie ein Schraubenzieher oder ein Akkuschrauber, benötigt, um die Schrauben in den Hohlraumdübel einzuschrauben.

Die Aufgabe der vorliegenden Erfindung besteht somit darin, ein besonders einfach und schnell zu montierendes Verbindungselement bzw. ein Verfahren zum einfachen und schnellen Befestigen wenigstens zweier Bauteile aneinander zu schaffen. Insbesondere soll das Verbindungselement ohne großen Aufwand, d.h. mit nur einer Hand und ohne zusätzliches Werkzeug, montierbar sein.

Erfindungsgemäß wird diese Aufgabe durch ein Verbindungselement mit den Merkmalen gemäß dem unabhängigen Patentanspruch 1 sowie durch ein Verfahren mit den Merkmalen gemäß dem unabhängigen Patentanspruch 10 gelöst. Weitere Merkmale und Details der Erfindung ergeben sich aus den Unteransprüchen, der Beschreibung sowie den Zeichnungen. Dabei gelten Merkmale und Details, die im Zusammenhang mit dem erfindungsgemäßen Verbindungselement beschrieben sind, selbstverständlich auch im Zusammenhang mit dem erfindungsgemäßen Verfahren, und jeweils umgekehrt, so dass bezüglich der Offenbarung zu den einzelnen Erfindungsaspekten stets wechselseitig Bezug genommen wird.

Gemäß dem ersten Aspekt der Erfindung wird die Aufgabe durch ein Verbindungselement zum Befestigen wenigstens zweier Bauteile aneinander, aufweisend ein erstes und ein zweites Scherelement, die an einer ersten Stelle dreh- und/oder schwenkbeweglich aneinander angeordnet sind, wobei jedes Scherelement einen bogenförmig ausgebildeten ersten Schenkel und einen abgewinkelt zum ersten Schenkel angeordneten zweiten Schenkel aufweist, wobei die erste Stelle im Übergangsbereich von dem ersten zum zweiten Schenkel eines jeden Scherelementes vorgesehen ist, wobei die zweiten Schenkel jeweils eine Anschlagfläche zum Anschlag an eines der zu verbindenden Bauteile aufweisen, wobei die Breite der bogenförmig ausgebildeten ersten Schenkel zu ihren der ersten Stelle abgewandten freien Enden konstant abnimmt, wobei die beiden bogenförmig ausgebildeten ersten Schenkel der beiden Scherelemente in Relation zueinander in unterschiedliche Dreh- bzw. Schwenkrichtungen gebogen sind, und wobei an einem der ersten Stelle abgewandten Bereich des zweiten Schenkels des ersten Scherelementes ein Arretierungselement dreh- und/oder schwenkbeweglich angeordnet ist, das zur Befestigung an einem der ersten Stelle abgewandten Bereich des zweiten Schenkels des zweiten Scherelementes ausgebildet ist, gelöst.

Kern der Erfindung ist, dass durch die Dreh- bzw. Schwenkmöglichkeit der Scherelemente, durch die spezielle Form der ersten Schenkel der Scherelemente und durch die Anordnung der ersten Schenkel zu den zweiten Schenkeln der Scherelemente das Verbindungselement in fluchtend angeordnete Öffnungen von Bauteilen eingeführt werden kann und dass durch das Einführen des Verbindungselementes die Bauteile automatisch aneinander fixiert werden. Beim Einführen der ersten Schenkel der beiden Scherelemente werden diese in unterschiedliche Richtungen gedreht bzw. geschwenkt. Damit diese in die Öffnungen eingeführt werden können, beträgt die maximale Breite der Scherelemente die Breite der Öffnungen. Zu dem freien Ende des ersten Schenkels der Scherelemente nimmt die Breite des ersten Schenkels konstant ab. Dies ermöglicht es überhaupt, dass die bogenförmig ausgebildeten ersten Schenkel der Scherelemente gleichzeitig durch die fluchtend angeordneten Öffnungen der zumindest zwei Bauteile eingeführt werden können. Dabei gleiten die Seiten der bogenförmig ausgebildeten ersten Schenkel an der Vorderkante der Öffnung des ersten Bauteiles entlang. Sind die beiden ersten Schenkel mit ihrer maximalen Breite in die Öffnungen eingeführt, liegen diese vorteilhafterweise formschlüssig an den Innenwandungen der Öffnungen der Bauteile an. Hinter der Öffnung des wenigstens einen zweiten Bauteils spreizen die ersten Schenkel auseinander, so dass ein Zurückführen des Verbindungselementes nur unter Kraftaufwand möglich wäre. Ferner liegen bei vollständig in die Öffnungen der Bauteile eingeführten ersten Schenkeln die dem ersten Bauteil zugewandten Seiten der zweiten Schenkel der Scherelemente an dem ersten Bauteil an. Die zweiten Schenkel der Scherelemente fixieren das Verbindungselement an der Außenseite des ersten Bauteils, so dass einen weiteres Einführen des Verbindungselementes in die Öffnungen nicht möglich ist. Dass an dem zweiten Schenkel des ersten Scherelementes angeordnete Arretierungselement arretiert die beiden zweiten Schenkel der Scherelemente zueinander. Hierdurch können die Scherelemente zueinander nicht mehr verdreht- oder verschwenkt werden, so dass das Verbindungselement in den Öffnungen der Bauteile fixiert ist. Auf der einen Seite der Bauteile verhindern die auseinandergespreizten bogenförmigen ersten Schenkel ein Zurückführen des Verbindungselementes, auf der anderen Seite der Bauteile verhindern die an der Außenseite des ersten Bauteils anliegenden zweiten Schenkel ein weiteres Einführen des Verbindungselementes. Erst durch eine Entriegelung der Arretierung des Arretierungselementes können die beiden Scherelemente wieder zueinander verdreht-oder verschwenkt werden, so dass ein Hinausziehen das Verbindungselementes aus den Öffnungen der Bauteile ermöglicht wird.

Das erste und das zweiten Scherelement sind an einer ersten Stelle dreh-und/oder schwenkbeweglich aneinander befestigt. Diese erste Stelle, das heißt die Anordnung der Scherelemente aneinander, ist im Übergangsbereich des ersten Schenkels zu dem zweiten Schenkel eines jeden Scherelementes vorgesehen. Diese erste Stelle des Verbindungselementes ist derart angeordnet, dass diese bei einem vollständigen Einführen der ersten Schenkel außerhalb der Öffnungen der Bauteile verbleibt. Die zweiten Schenkel weisen vorteilhafterweise eine Anschlagfläche auf, durch die die zweiten Schenkel formschlüssig an die Außenseite des ersten Bauteils angelegt werden können. Die Anschlagfläche dient zum formschlüssigen Anschlag der zweiten Schenkel an der Außenseite des ersten Bauteils.

Das Arretierungselement ist an einem der ersten Stelle abgewandten Bereich des zweiten Schenkels des ersten Scherelementes angeordnet. Alternativ hierzu könnte das Arretierungselement an einem der ersten Stelle abgewandten Bereich des zweiten Schenkels des zweiten Scherelementes angeordnet sein. Das Arretierungselement ist zur Befestigung an dem jeweils anderen zweiten Schenkel ausgebildet. D.h., ist das Arretierungselement an dem zweiten Schenkel des ersten Scherelementes angeordnet, wird dieses an dem zweiten Schenkel des zweiten Scherelementes befestigt. Umgekehrt würde ein an dem zweiten Schenkel des zweiten Scherelementes angeordnetes Arretierungselement an dem zweiten Schenkel des ersten Scherelementes befestigt werden.

Das Arretierungselement kann unterschiedlich ausgebildet sein. In einer einfachen Ausführungsvariante ist das Arretierungselement ein stabil ausgebildetes Gummiband beziehungsweise ein stabil ausgebildeter Gummiring. Dieser wird nach dem Anschlag der Anschlagflächen der zweiten Schenkel der Scherelemente an dem ersten Bauteil um beide zweiten Schenkel herumgeführt. Hierdurch wird eine Bewegung der Scherelemente zueinander verhindert, so dass das Verbindungselement nicht wieder aus den Öffnungen der Bauteile hinauszogen werden kann. Würde das Arretierungselement die Bewegung der Scherelemente zueinander nicht sperren, könnte das Verbindungselement aus den Öffnungen der Bauteile hinausgezogen werden.

Beide Scherelemente können einstückig miteinander ausgebildet sein. In diesem Sonderfall würden die Scherelemente aus einem elastischen Material ausgebildet sein und aufgrund ihres elastischen Materials zueinander verdreht oder verschenkt werden können. Bevorzugt ist jedoch, dass die erste Stelle durch eine erste Drehachse gebildet ist, an der die Scherelemente zueinander drehbar gelagert sind. Dies ermöglicht eine definierte Bewegung der beiden Scherelemente zueinander. Dabei ist die Drehachse durch jeweils eine Bohrung in den Scherelementen hindurchgeführt, wobei die Bewegung der Scherelemente axial zur Drehachse begrenzt ist.

Wie bereits zuvor ausgeführt, kann das Arretierungselement verschiedenartig ausgebildet sein. Besonders bevorzugt ist das Arretierungselement jedoch als Arretierungshebel ausgebildet, der an einer zweiten Stelle dreh- und/oder schwenkbeweglich gelagert ist, wobei die zweite Stelle in dem der ersten Stelle abgewandten Bereich des zweiten Schenkels des ersten Scherelementes vorgesehen ist. So kann der Arretierungshebel an dem zweiten Schenkel des zweiten Scherelementes befestigt werden. Dies kann durch ein zusätzliches Befestigungselement erfolgen. Beispielsweise kann die Befestigung des Arretierungshebels an dem zweiten Schenkel des zweiten Scherelementes durch eine stoffschlüssige Verbindung realisiert werden. Hierzu können sowohl an dem Arretierungshebel, als auch an dem zweiten Schenkel des zweiten Scherelementes Klebeelemente oder Klettelemente vorgesehen sein.

Die Öffnungen in den Bauteilen weisen vorteilhafterweise eine rechteckigförmige Gestalt auf. Je weiter das Verbindungselement durch die Öffnungen eingeschoben wird, desto weiter spreizen sich die ersten Schenkel der Scherelemente des Verbindungselementes auseinander. Ist das Verbindungselement vollständig eingeführt, rastet der Arretierungshebel an dem Rastvorsprung des zweiten Schenkels des zweiten Scherelementes ein und verhindert ein Lösen der Verbindung.

Der Vorteil eines derartigen Verbindungselementes liegt in der einfachen und schnellen Montage an zumindest zwei Bauteilen. Die Montage ist von einer Seite der Bauteile aus möglich. Die Öffnungen in den Bauteilen zentrieren sich beim Einführen des Verbindungselementes selbstständig und die zu verbindenden Bauteile werden automatisch aneinandergepresst.

In einer weiteren bevorzugten Ausführungsvariante des Verbindungselementes ist das Arretierungselement als federelastisches Element, insbesondere als Spiralfeder, ausgebildet. Die beiden Enden des federelastischen Elementes sind an den freien Enden der beiden zweiten Schenkel des Scherelementes befestigt. Bei der Einführung des Verbindungselementes in die Öffnungen der Bauteile entfernen sich die freien Enden der zweiten Schenkel voneinander. Ist das federelastische Element, insbesondere die Spiralfeder, in der Ausgangsstellung, d.h. beim Einführen der freien Enden der ersten Schenkel des Scherelementes in die Öffnungen der Bauelemente, gestaucht, drückt dieses die freien Enden der zweiten Schenkel der Scherelemente auseinander. Durch die Federkraft des federelastischen Elementes werden die beiden Scherelemente in der eingeführten Position gehalten und können nur unter Aufwendung einer Kraft zueinander verdreht werden.

Bevorzugt ist ferner ein Verbindungselement, bei dem zur Befestigung des Arretierungshebel an dem der ersten Stelle abgewandten Bereich des zweiten Schenkels des zweiten Scherelementes eine Bohrung in dem der zweiten Stelle abgewandten Bereich des Arretierungselementes und eine Bohrung in dem der ersten Stelle abgewandten Bereich des zweiten Schenkels des zweiten Scherelementes vorgesehen ist, und bei dem ein Befestigungssplint vorgesehen ist, der durch die fluchtend zueinander anordenbaren Bohrungen hindurchsteckbar ist. Durch Einführen eines Befestigungssplintes sind die beiden Scherelemente fix miteinander befestigt, so dass diese nicht mehr zueinander verdreht bzw. verschenkt werden können.

Eine andere vorteilhafte Ausführungsvariante des Verbindungselementes sieht vor, dass zur Befestigung des Arretierungselementes an dem der ersten Stelle abgewandten Bereich des zweiten Schenkels ein Befestigungselement oder ein Rastvorsprung vorgesehen ist. D.h., der Arretierungshebel, insbesondere das freie Ende des Arretierungshebels, greift bzw. schnappt vorteilhafterweise in einen Rastvorsprung an dem zweiten Schenkel des zweiten Scherelementes ein. Durch das Einschnappen ist der Arretierungshebel kraftschlüssig, und vorteilhafterweise auch formschlüssig, mit dem zweiten Schenkel des zweiten Scherelementes verbunden, so dass der Arretierungshebel in dieser Position die Bewegung der Scherelemente zueinander sperrt. Alternativ dazu kann der Arretierungshebel auch an dem zweiten Schenkel des zweiten Scherelementes angeordnet sein.

Bevorzugt ist die zweite Stelle durch eine zweite Drehachse gebildet, an der das Arretierungselement, insbesondere der Arretierungshebel, drehbar gelagert ist. Hierzu kann im Bereich des freien Endes des zweiten Schenkels des ersten Scherelementes eine weitere Bohrung zur Aufnahme der zweiten Drehachse vorgesehen sein. Das Arretierungselement, insbesondere der Arretierungshebel, lässt sich durch eine zweite Drehachse in dem Verbindungselement besonders einfach verdrehen bzw. verschwenken.

Die ersten und die zweiten Schenkel eines jeden Scherelementes verlaufen geneigt zueinander. Die Neigung der beiden Schenkel eines Scherelementes zueinander ist abhängig von der Lage der Öffnung in dem ersten Bauteil zu der Außenseite, das heißt der Form der Außenseite, des ersten Bauteils. Im Idealfall verläuft die Öffnung senkrecht zu der Außenseite des ersten Bauteils. Die Außenseite des ersten Bauteiles kann jedoch auch verschieden geneigt zu der Öffnung, d.h. zu der Längsachse der Öffnung, verlaufen. So kann die Außenseite beispielsweise auch eine konvexe oder konkave Form aufweisen. Abhängig von der Form der Außenseite des ersten Bauteils sowie der Lage der Öffnung zu der Außenseite können die beiden Schenkel eines Scherelementes verschiedenartig zueinander geneigt ausgebildet sein. Insbesondere ist ein Verbindungselement bevorzugt, bei dem im Übergangsbereich der ersten und der zweiten Schenkel der jeweiligen Scherelemente die Mittelachsen des jeweils ersten und des jeweils zweiten Schenkels in einem Winkel von 85° bis 95° zueinander verlaufen, wobei die Mittelachsen der ersten Schenkel zum freien Ende hin einen gebogenen Verlauf aufweisen. Besonders bevorzugt ist es, wenn im Übergangsbereich des ersten und des zweiten Schenkels eines Scherelementes die Mittelachsen der Schenkel senkrecht aufeinander stehen. Dabei schneiden sich die Mittelachsen der Schenkel vorteilhafterweise in der Längsachse der Drehachse der ersten Stelle.

Eine weitere vorteilhafte Ausführungsform des Verbindungselementes sieht vor, dass wenigstens ein drittes Scherelement an der ersten Stelle dreh-und/oder schwenkbeweglich zu dem ersten und dem zweiten Scherelement angeordnet ist, wobei das wenigstens eine dritte Scherelement einen bogenförmig ausgebildeten ersten Schenkel und einen abgewinkelt zum ersten Schenkel angeordneten zweiten Schenkel aufweist. Insbesondere vorteilhaft ist es, wenn zwei weitere Scherelemente vorgesehen sind. Diese weiteren Scherelemente sind um 180° gedreht zu den ersten beiden Scherelementen an der ersten Stelle, insbesondere der ersten Drehachse, des Verbindungselementes dreh- oder schwenkbar gelagert. Hierdurch können auf beiden Seiten des Verbindungselementes gleichzeitig Bauteile miteinander verbunden werden. Das Verbindungselement ist dann zwischen Bauteilen auf jeder Seite angeordnet.

Die ersten Schenkel der Scherelemente weisen einen bogenförmigen Verlauf auf, wobei die Breite der ersten Schenkel zu ihren freien Enden hin abnimmt. Bevorzugt ist daher, dass die ersten Schenkel einen sichelförmigen Verlauf aufweisen. Die freien Enden der ersten Schenkel können dabei spitz, aber auch rund zulaufen.

Gemäß dem zweiten Aspekt der Erfindung wird die Aufgabe durch ein Verfahren zum Befestigen wenigstens zweier Bauteile durch ein Verbindungselement gemäß dem ersten Aspekt der Erfindung aneinander gelöst. Dabei ist das Verfahren durch folgende Schritte gekennzeichnet:
- die freien Enden der ersten Schenkel des ersten und des zweiten Scherelementes werden übereinander angeordnet und durch fluchtend angeordnete Öffnungen in den wenigstens zwei Bauteilen eingeführt,
- das Verbindungselement wird durch die fluchtend angeordneten Öffnungen eingeschoben, bis die Anschlagflächen der zweiten Schenkel der Scherelemente an eines der zu verbindenden Bauteile anschlägt und die aus den Öffnungen der Bauteile hinaustretenden Bereiche der ersten Schenkel der Scherelemente durch ihr Auseinanderspreizen das Verbindungselement formschlüssig an der Öffnung des wenigstens einen zweiten Bauteils fixieren,
- das Arretierungselement, welches an dem zweiten Schenkel des ersten Scherelementes dreh- und/oder schwenkbeweglich angeordnet ist, wird an dem der ersten Stelle abgewandten Bereich des zweiten Schenkels des zweiten Scherelementes befestigt.

Damit das Verbindungselement in die fluchtend angeordneten Öffnungen der Bauteile eingeführt werden kann, müssen zunächst die freien Enden der ersten Schenkel der beiden Scherelemente übereinander angebracht werden. Hierdurch können die spitz oder rund zulaufenden freien Enden der ersten Schenkel in die Öffnung des ersten Bauteils eingeführt werden. Wird das Verbindungselement unter Kraftaufwand nun weiter in die Öffnung eingeschoben, verdrehen bzw. verschwenken die beiden Scherelemente sich zueinander, so dass ein weiteres Einführen der ersten Schenkel durch die Öffnungen ermöglicht wird. Schlagen die Anschlagflächen der zweiten Schenkel der Scherelemente an das erste Bauteil an, ist das Verbindungselement vollständig in die Öffnungen eingeführt. Die beiden ersten Schenkel der Scherelemente spreizen sich aufgrund ihrer bogenförmigen Form hinter der Öffnung des zweiten Bauelementes auseinander. Hierdurch liegt das Verbindungselement formschlüssig in den Öffnungen der Bauteile ein. Wird über das Arretierungselement die Bewegung der beiden Scherelemente zueinander gesperrt, ist das Verbindungselement in den Öffnungen der Bauteile fixiert und fixiert gleichzeitig diese aneinander. Das Arretierungselement wird vorteilhafterweise an dem der ersten Stelle abgewandten Bereich des zweiten Schenkels des zweiten Scherelementes befestigt. Ist das Arretierungselement an dem zweiten Schenkel des zweiten Scherelementes angeordnet, wird dieses an dem der ersten Stelle abgewandten Bereich des zweiten Schenkels des ersten Scherelementes befestigt.

Bevorzugt ist ein Verfahren zum Befestigen wenigstens zweier Bauteile aneinander, bei dem ein Verbindungselement gemäß dem ersten Aspekt der Erfindung verwendet wird.

Ist das Arretierungselement als Arretierungshebel ausgebildet, wobei der Arretierungshebel eine Bohrung in dem der zweiten Stelle abgewandten Bereich des Arretierungselementes aufweist und eine Bohrung in dem der ersten Stelle abgewandten Bereich des zweiten Schenkels des zweiten Scherelementes vorgesehen ist, werden nach dem vollständigen Einführen des Verbindungselementes in die Öffnungen der Bauelemente die beiden Bohrungen fluchtend zueinander angeordnet und ein Befestigungssplint in die Bohrungen hindurchgesteckt. Durch den Befestigungssplint sind die Scherelemente relativ zueinander fixiert, so dass das Verbindungselement nicht mehr aus den Öffnungen der Bauteile hinaus gezogen werden kann und dadurch diese aneinander fixiert.

Insbesondere bevorzugt ist ein Verfahren zum Befestigen wenigstens zweier Bauteile aneinander, bei dem das Arretierungselement als Arretierungshebel ausgebildet ist, und bei denen der Arretierungshebel an einem an dem der ersten Stelle abgewandten Bereich des zweiten Schenkels vorgesehenen Rastvorsprung formschlüssig einrastet.

Die vorliegende Erfindung wird nun anhand der beigefügten Zeichnungen näher erläutert, in denen zeigen:
- Figur 1: ein Verbindungselement, welches in Öffnungen zweier Bauteile eingesteckt wird;
- Figur 2, 3: die Bewegung der Scherelemente während des Einsteckens des Verbindungselementes;
- Figur 4: ein vollständig eingeführtes Verbindungselement, welches zwei Bauteile aneinander fixiert;
- Figur 5: ein vollständig eingeführtes Verbindungselement, welches zwei Bauteile aneinander fixiert;

Die nachfolgend näher geschilderten Ausführungsbeispiele stellen bevorzugte Ausführungsformen der vorliegenden Erfindung dar.

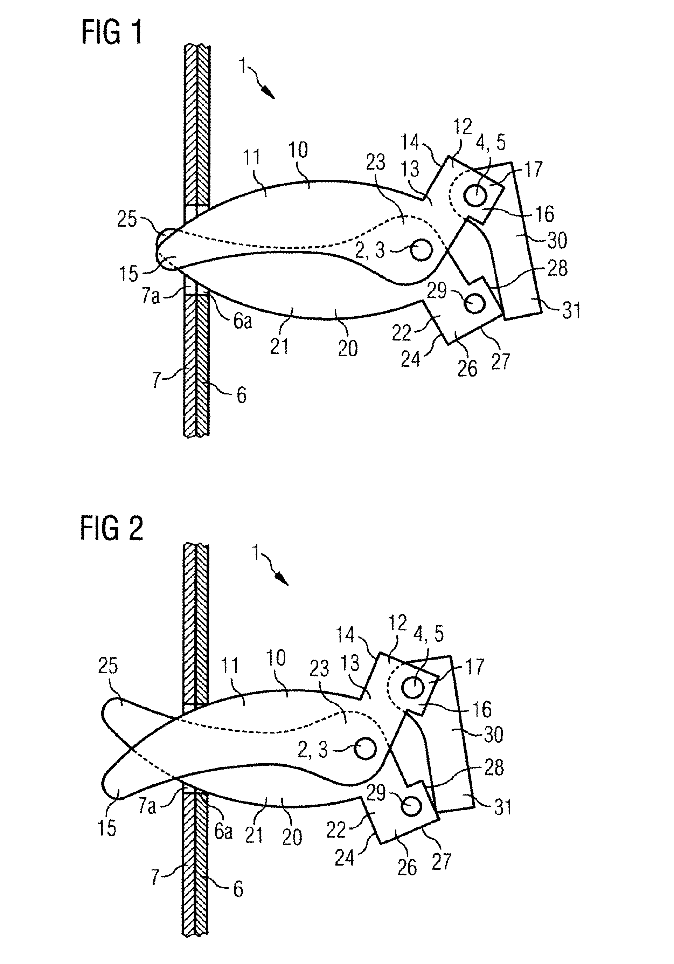

In der Fig. 1 ist eine erste Variante eines Verbindungselementes 1 dargestellt. Das Verbindungselement 1 weist zwei an einer ersten Stelle 2 miteinander verbundene Scherelemente 10, 20 auf. Die erste Stelle 2 weist in dieser Ausführungsvariante eine erste Drehachse 3 auf, an der die beiden Scherelemente 10, 20 drehbar gelagert sind. Jedes der beiden Scherelemente 10, 20 weist einen ersten Schenkel 11, 21 und einen zweiten Schenkel 12, 22 auf. Die beiden Schenkel 11, 12 bzw. 21, 22 eines jeden Scherelementes 10, 20 sind geneigt zueinander angeordnet. Die ersten Schenkel 11, 21 sind bogen- bzw. sichelförmig ausgebildet, wobei diese zu ihren freien Enden 15, 25 eine abnehmende Breite 11b, 21b aufweisen. Die freien Enden 15, 25 eines jeden ersten Schenkels 11, 21 sind spitz oder rund, wie in dieser Ausführungsvariante, ausgebildet. Die zweiten Schenkel 12, 22 verlaufen um 90° bzw. um circa 90° geneigt zu dem der ersten Stelle zugewandten Ende der ersten Schenkel 11, 21. Die zweiten Schenkel 12, 22 sind kürzer ausgebildet, als die ersten Schenkel 11, 21. Die erste Drehachse 3 ist im Übergangsbereich 13, 23 zwischen dem ersten und dem zweiten Schenkel 11, 12 bzw. 21, 22 eines jeden Scherelementes 10, 20 angeordnet. An dem der Drehachse 3 abgewandten Bereich 16 des zweiten Schenkels 12 des ersten Scherelementes 10 ist eine zweite Stelle 4, hier ebenfalls eine Drehachse 5, vorgesehen, an der ein Arretierungselement 30 dreh- und/oder verschwenkbar angeordnet ist. Der zweite Schenkel 12 des ersten Scherelementes 10 sowie der zweite Schenkel 22 des zweiten Scherelementes 20 weisen jeweils an einer dem Bauteil 6 zugewandten Seite eine Anschlagfläche 14, 24 auf. Diese Anschlagfläche 14, 24 dient zum Anschlag an die Außenseite des ersten Bauteils 6, wenn das Verbindungselement 1 vollständig durch die fluchtend angeordneten Öffnungen 6a, 7a des ersten und des zweiten Bauteils 6, 7 eingeführt ist. Damit das Verbindungselement 1 die beiden Bauteile 6, 7 aneinander fixiert, müssen zunächst die beiden Bauteile 6, 7 aneinander gelegt werden, so dass die Öffnungen 6a, 7a der beiden Bauteile 6, 7 fluchtend zueinander angeordnet sind. Wie in Fig. 1 gezeigt, werden die freien Enden 15, 25 der beiden ersten Schenkel 11, 21 der beiden Scherelemente 10, 20 übereinander gelegt. Nur so können beide freien Enden 15, 25 gleichzeitig in die fluchtend angeordneten Öffnungen 6a, 7a der beiden Bauteile 6, 7 eingeführt werden. Das Arretierungselement 30 hat in dieser Stellung des Verbindungselementes 1 noch keine Funktion. Die Außenkanten der bogen- bzw. sichelförmig ausgebildeten ersten Schenkel 11, 21 streifen bei Einführen des Verbindungselementes 1 die Kante der ersten Öffnung 6a des ersten Bauteils 6. Hierdurch werden die beiden ersten Schenkel 11, 21 und damit die beiden Scherelemente 10, 20 relativ zueinander um die erste Drehachse 3 der ersten Stelle 2 verdreht. Dabei drehen sich die beiden Scherelemente 10, 20 in entgegengesetzte Drehrichtungen um die erste Drehachse 3. Die entgegengesetzte Drehbewegung der Scherelemente 10, 20 ermöglicht das Einführen der bogen- bzw. sichelförmig ausgebildeten ersten Schenkel 11, 21 der beiden Scherelemente 10, 20 in die Öffnungen 6a, 7a der beiden Bauteile 6, 7.

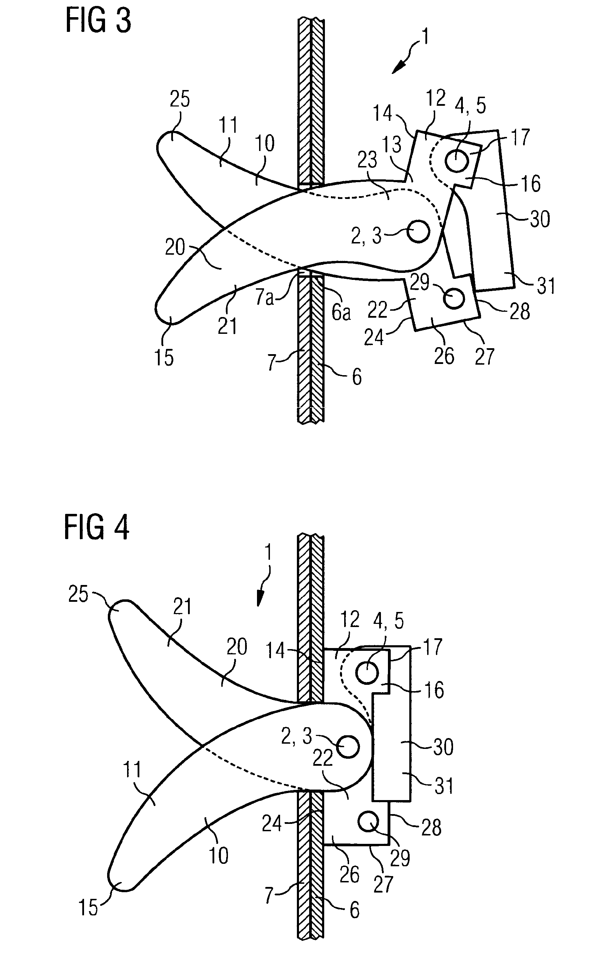

Die Positionen der ersten Schenkel 11, 21 der beiden Scherelemente 10, 20 während des Einführphase des Verbindungselementes 1 in die Öffnungen 6a, 7a der beiden Bauteile 6, 7 zueinander, ist in den Fig. 2 und 3 dargestellt. Zunächst überkreuzen sich die beiden ersten Schenkel 11, 21 der beiden Scherelemente 10, 20, siehe Fig. 2, bevor sie sich voneinander wegspreizen, siehe Fig. 3. Die freien Enden 17, 27 der beiden zweiten Schenkel 12, 22 der Scherelemente 10, 20 bewegen sich bei dem Einführvorgang des Verbindungselementes 1 voneinander weg. Im vollständig eingeführten Zustand des Verbindungselementes 1 in die Öffnungen 6a, 7a der beiden Bauteile 6, 7 liegen die Anschlagflächen 14, 24 der beiden zweiten Schenkel 12, 22 an der Außenseite des ersten Bauteils 6 an. Diese liegen bevorzugt formschlüssig an der Außenseite des ersten Bauteils 6 an. D.h., im vollständig eingeführten Zustand kann das Verbindungselement 1 nicht mehr weiter in die Öffnungen 6a, 7a der beiden Bauteile 6, 7 eingeführt werden, da die Anschlagflächen 14, 24 der zweiten Schenkel 12, 22 dies unterbinden. Auf der anderen Seite der Öffnungen 6a, 7a, d.h. an der Kante der Öffnungen 7a, die dem ersten Bauteil 6 abgewandt ist, liegen die auseinandergespreizten ersten Schenkel 11, 21 an, so dass diese ein Herausfallen bzw. ein Herausziehen des Verbindungselementes 1 aus den Öffnungen 6a, 7a verhindern. Damit die Scherelemente 10, 20 sich nicht mehr zueinander um die erste Drehachse 3 der ersten Stelle 2 verdrehen, rastet das Ende 31 des Arretierungselement 30 an dem Rastvorsprung 28 des zweiten Schenkels 22 des zweiten Scherelementes 20 ein. Das Arretierungselement 30 ist im eingerasteten Zustand fest an dem Rastvorsprung 28 fixiert, so dass dadurch eine Verdrehung der Scherelemente 10, 20 verhindert wird. Nach der Sperrung der Bewegung der Scherelemente 10, 20 durch das Arretierungselement 30 sind die beiden Bauteile 6, 7 fest miteinander verbunden. Das Arretierungselement 30 kann nur unter Aufbringung einer äußeren Kraft aus der Sperrung gelöst werden. Das Arretierungselement 30 sowie der zweite Schenkel 22 des zweiten Scherelementes 20 können jeweils eine Bohrung aufweisen, durch die zur Sperrung der Bewegung der Scherelemente 10, 20 zueinander ein Befestigungssplint eingesteckt werden kann. Die Bohrung 29 des zweiten Schenkels 22 des zweiten Scherelementes 20 ist in den Fig. 1 bis 5 dargestellt.

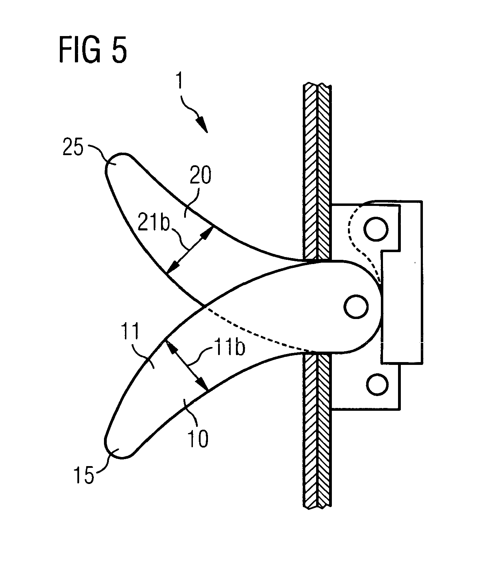

In der Fig. 5 ist angedeutet, was in Sinne der Anmeldung unter der Breite 11b, 21b der beiden ersten Schenkel 11, 21 der beiden Scherelemente 10, 20 verstanden wird.

Je nach Dicke und Anzahl der aneinander zu befestigenden Bauteile 6, 7 sind die Längen und die Form der bogenförmig ausgebildeten ersten Schenkel 11, 21 auszulegen. Selbstverständlich können durch ein zuvor beschriebenes Verbindungselement 1 auch mehr als zwei Bauteile 6, 7 aneinander befestigt werden.

Als Arretierungselement 30 kann in einer anderen Ausführungsvariante des Verbindungselementes 1 ein Gummiring, Klebeelemente oder Klettelemente an den zweiten Schenkeln 12, 22 oder ein elastisches Federelement vorgesehen sein. Dabei ist das elastische Federelement derart an den freien Enden 17, 27 der zweiten Schenkel 12, 22 angeordnet, dass dieses gestaucht wird, wenn das Verbindungselement 1 aus der fixierenden Stellung, wie in Fig. 4 gezeigt, aus den Öffnungen 6a, 7a der Bauteile 6, 7 entfernt wird.

### Bezugszeichenliste

- 1: Verbindungselement
- 2: erste Stelle
- 3: erste Drehachse
- 4: zweite Stelle
- 5: zweite Drehachse
- 6: Bauteil
- 6a: Öffnung
- 7: Bauteil
- 7a: Öffnung

- 10: erstes Scherelement
- 11: erster Schenkel des ersten Scherelementes
- 11b: Breite des ersten Schenkels des ersten Scherelementes
- 12: zweiter Schenkel des ersten Scherelementes
- 13: Übergangsbereich von erstem zu zweiten Schenkel
- 14: Anschlagfläche am zweiten Schenkel
- 15: freies Ende des ersten Schenkels
- 16: abgewandter Bereich
- 17: freies Ende des zweiten Schenkels

- 20: zweites Scherelement
- 21: erster Schenkel des zweiten Scherelementes
- 21b: Breite des ersten Schenkels des zweiten Scherelemen- tes
- 22: zweiter Schenkel des zweiten Scherelementes
- 23: Übergangsbereich von erstem zu zweiten Schenkel
- 24: Anschlagfläche am zweiten Schenkel
- 25: freies Ende des ersten Schenkels
- 26: abgewandter Bereich
- 27: freies Ende des zweiten Schenkels
- 28: Rastvorsprung
- 29: Bohrung

- 30: Arretierungselement
- 31: abgewandter Bereich

## Patentansprüche

1. Verbindungselement (1) zum Befestigen wenigstens zweier Bauteile (6, 7) aneinander, aufweisend ein erstes und ein zweites Scherelement (10, 20), die an einer ersten Stelle (2) dreh- und/oder schwenkbeweglich aneinander angeordnet sind, wobei jedes Scherelement (10, 20) einen bogenförmig ausgebildeten ersten Schenkel (11, 21) und einen abgewinkelt zum ersten Schenkel (11, 21) angeordneten zweiten Schenkel (12, 22) aufweist,
wobei die erste Stelle (2) im Übergangsbereich (13, 23) von dem ersten (11, 21) zum zweiten Schenkel (12, 22) eines jeden Scherelementes (10, 20) vorgesehen ist,
wobei die zweiten Schenkel (12, 22) jeweils eine Anschlagfläche (14, 24) zum Anschlag an eines der zu verbindenden Bauteile (6) aufweisen,
wobei die Breite (11b, 21b) der bogenförmig ausgebildeten ersten Schenkel (11, 21) zu ihren der ersten Stelle (2) abgewandten freien Enden (15, 25) konstant abnimmt,
wobei die beiden bogenförmig ausgebildeten ersten Schenkel (11, 21) der beiden Scherelemente (10, 20) in Relation zueinander in unterschiedliche Dreh- bzw. Schwenkrichtungen gebogen sind,
wobei an einem der ersten Stelle (2) abgewandten Bereich (16) des zweiten Schenkels (12) des ersten Scherelementes (10) ein Arretierungselement (30) dreh- und/oder schwenkbeweglich angeordnet ist, das zur Befestigung an einem der ersten Stelle (2) abgewandten Bereich (26) des zweiten Schenkels (22) des zweiten Scherelementes (20) ausgebildet ist.

2. Verbindungselement (1) nach Anspruch 1, **dadurch gekennzeichnet, dass** die erste Stelle (2) durch eine erste Drehachse (3) gebildet ist, an der die Scherelemente (10, 20) drehbar gelagert sind.

3. Verbindungselement (1) nach Anspruch 1 oder 2, **dadurch gekennzeichnet, dass** das Arretierungselement (30) als Arretierungshebel ausgebildet ist, der an einer zweiten Stelle (4) dreh- und/oder schwenkbeweglich gelagert ist, wobei die zweite Stelle (4) in dem der ersten Stelle (2) abgewandten Bereich (16) des zweiten Schenkels (12) des ersten Scherelementes (10) vorgesehen ist.

4. Verbindungselement (1) nach Anspruch 3, **dadurch gekennzeichnet, dass** die zweite Stelle (4) durch eine zweite Drehachse (5) gebildet ist, an der das Arretierungselement (30) drehbar gelagert ist.

5. Verbindungselement (1) nach der vorhergehenden Ansprüche 1 bis 4, **dadurch gekennzeichnet, dass** zur Befestigung des Arretierungselementes (30) an dem der ersten Stelle (2) abgewandten Bereich (26) des zweiten Schenkels (22) des zweiten Scherelementes (20) eine Bohrung in dem der zweiten Stelle (4) abgewandten Bereich (31) des Arretierungselementes (30) und eine Bohrung (29) in dem der ersten Stelle (2) abgewandten Bereich (26) des zweiten Schenkels (22) des zweiten Scherelementes (20) vorgesehen ist, und dass ein Befestigungssplint vorgesehen ist, der durch die fluchtend zueinander anordenbaren Bohrungen hindurchsteckbar ist.

6. Verbindungselement (1) nach einem der vorhergehenden Ansprüche 1 bis 5, **dadurch gekennzeichnet, dass** zur Befestigung des Arretierungselementes (30) an dem der ersten Stelle (2) abgewandten Bereich (26) des zweiten Schenkels (22) ein Befestigungselement oder ein Rastvorsprung (28) vorgesehen ist.

7. Verbindungselement (1) nach einem der vorhergehenden Ansprüche 1 bis 6, **dadurch gekennzeichnet, dass** im Übergangsbereich (13, 23) der ersten und der zweiten Schenkel (11, 21; 12, 22) der jeweiligen Scherelemente (10, 20) die Mittelachsen des jeweils ersten und des jeweils zweiten Schenkels (11, 21; 12, 22) in einem Winkel von 85° bis 95° zueinander verlaufen, wobei die Mittelachsen der ersten Schenkel (11, 21) zum freien Ende (15, 25) hin einen gebogenen Verlauf aufweisen.

8. Verbindungselement (1) nach einem der vorhergehenden Ansprüche 1 bis 7, **dadurch gekennzeichnet, dass** wenigstens ein drittes Scherelement an der ersten Stelle (2) dreh- und/oder schwenkbeweglich zu dem ersten und dem zweiten Scherelement (10, 20) angeordnet ist, wobei das wenigstens eine dritte Scherelement einen bogenförmig ausgebildeten ersten Schenkel und einen abgewinkelt zum ersten Schenkel angeordneten zweiten Schenkel aufweist.

9. Verbindungselement (1) nach einem der vorhergehenden Ansprüche 1 bis 8, **dadurch gekennzeichnet, dass** die ersten Schenkel (11, 21) der Scherelemente (10, 20) einen sichelförmigen Verlauf aufweisen.

10. Verfahren zum Befestigen wenigstens zweier Bauteile (6, 7) durch ein Verbindungselement (1) nach einem der Ansprüche 1 bis 9 aneinander, **gekennzeichnet durch** folgende Schritte:
- die freien Enden (15, 25) der ersten Schenkel (11, 21) des ersten und des zweiten Scherelementes (10, 20) werden übereinander angeordnet und **durch** fluchtend angeordnete Öffnungen (6a, 7a) in den wenigstens zwei Bauteilen (6, 7) eingeführt,
- das Verbindungselement (1) wird **durch** die fluchtend angeordneten Öffnungen (6a, 7a) eingeschoben, bis die Anschlagflächen (14, 24) der zweiten Schenkel (12, 22) der Scherelemente (10, 20) an eines der zu verbindenden Bauteile (6) anschlägt und die aus den Öffnungen (6a, 7a) der Bauteile (6, 7) hinaustretenden Bereiche der ersten Schenkel (11, 21) der Scherelemente (10, 20) **durch** ihr Auseinanderspreizen das Verbindungselement (1) formschlüssig an der Öffnung (7a) des wenigstens einen zweiten Bauteils (7) fixieren,
- das Arretierungselement (30), welches an dem zweiten Schenkel (12) des ersten Scherelementes (10) dreh- und/oder schwenkbeweglich angeordnet ist, wird an dem der ersten Stelle (2) abgewandten Bereich (26) des zweiten Schenkels (22) des zweiten Scherelementes (20) befestigt.

11. Verfahren nach Anspruch 10, **dadurch gekennzeichnet, dass** das Arretierungselement (30) als Arretierungshebel ausgebildet ist, wobei der Arretierungshebel (30) eine Bohrung in dem der zweiten Stelle (4) abgewandten Bereich (31) des Arretierungselementes (30) aufweist und eine Bohrung (29) in dem der ersten Stelle (2) abgewandten Bereich (26) des zweiten Schenkels (22) des zweiten Scherelementes (20) vorgesehen ist, und dass die Bohrungen fluchtend zueinander angeordnet werden und ein Befestigungssplint in die Bohrungen hindurchgesteckt wird.

12. Verfahren nach Anspruch 10, **dadurch gekennzeichnet, dass** das Arretierungselement (30) als Arretierungshebel ausgebildet ist, und dass der Arretierungshebel (30) an einem an dem der ersten Stelle (2) abgewandten Bereich (26) des zweiten Schenkels (22) vorgesehenen Rastvorsprung (28) formschlüssig einrastet.

## Claims

1. Connection element (1) for attaching at least two components (6, 7) to one another, having a first and a second shear element (10, 20), which at a first location (2) are arranged to allow a rotational and/or a pivoting movement in relation to each other, with each shear element (10, 20) having a first arm embodied in a curved shape (11, 21) and a second arm (12, 22) disposed at an angle to the first arm (11, 21),
with the first location (2) being provided in the transition area (13, 23) from the first arm (11, 21) to the second arm (12, 22) of each shear element (10, 20),
with the second arm (12, 22) having a stop surface (14, 24) for contact with one of the components to be connected (6), with the width (11b, 21b) of the first arm embodied in a curved shape (11, 21) constantly reducing at its free end (15, 25) facing away from the first location (2),
with the two first curved arms (11, 21) of the two shear elements (10, 20) being bent in relation to one another in different rotation or pivoting directions,
a latching element (30) being arranged to provide a rotating and/or pivoting movement in an area (16) of the second arm (12) of the first shear element (10) facing away from the first location (2), that is embodied for attachment to an area (26) of the second arm (22) of the second shear element (20) facing away from the first location (2).

2. Connection element (1) according to claim 1, **characterised in that** the first location (2) is formed by a first axis of rotation (3), on which the shear elements (10, 20) are rotatably supported.

3. The connection element (1) according to claim 1 or 2, **characterised in that** the latching element (30) is embodied as a latching lever, which is supported at a second location (4) to provide a rotational or pivoting movement, with the second location (4) being provided in the area (16) of the second arm (12) of the first shear element (10) facing away from the first location (2).

4. Connection element (1) according to claim 3, **characterised in that** the second location (4) is formed by a second axis of rotation (5) on which the latching element (30) is rotatably supported.

5. Connection element (1) according to one of the preceding claims 1 to 4, **characterised in that**, to attach the latching element (30) to the area (26) of the second shear element (22) facing away from the first location (2), a hole is provided in the area (31) of the latching element (30) facing away from the second location (4) and a hole (29) in the area (26) of the second arm (22) of the second shear element (20) facing away from the first location (2), and that an attachment splint is provided which is able to be pushed through the holes able to be aligned flush with one another.

6. Connection element (1) according to one of the preceding claims 1 to 5, **characterised in that**, to attach the latching element (30), an attachment element or a latching projection (28) is provided in the area (26) of the second arm (22) facing away from the first location (2).

7. Connection element (1) according to one of the preceding claims 1 to 6, **characterised in that**, in the transition area (13, 23) between the first and the second arm (11, 21; 12, 22) of the respective shear elements (10, 20) the centre axes of the respective first and the respective second arm (11, 21; 12, 22) run at an angle of 85° to 95° to one another, with the centre axes of the first arms (11, 21) running in the shape of a curve towards the free end (15, 25).

8. Connection element (1) according to one of the preceding claims 1 to 7, **characterised in that** at least one third shear element is arranged at the first location (2) for rotational or hinged movement in relation to the first and the second shear element (10, 20), with the at least one third shear element having a first arm embodied in a curved shape and a second arm arranged angled away from the first arm.

9. Connection element (1) according to one of the preceding claims 1 to 8, **characterised in that** the first arms (11, 21) of the shear elements (10, 20) run in a sickle shape.

10. Method for attaching at least two components (6, 7) to each other by a connection element (1) according to one of claims 1 to 9, **characterised by** the following steps:
- the free ends (15, 25) of the first arm (11, 21) of the first and second shear element (10, 20) are arranged above one another and introduced through flush openings (6a, 7a) into the at least two components (6, 7),
- the connection element (1) is pushed through the flush openings (6a, 7a) until the stop surfaces (14, 24) of the second arms (12, 22) of the shear elements (10, 20) strike one of the components (6) to be connected and the areas of the first arm (11, 21) of the shear elements (10, 20) projecting from the openings (6a, 7a) of the components (6, 7), by spreading out, fix the connection element (1) in a form fit to the opening (7a) of the at least one second component (7),
- the latching element (30), which is arranged on the second arm (12) of the first shear element (10), to provide rotational and/or pivoting movement is attached to the area (26) of the second arm (22) of the second shear element (20) facing away from the first location.

11. Method according to claim 10, **characterised in that** the latching element (30) is embodied as a latching lever, with the latching lever (30) having a hole in the area (31) of the latching element (30) facing away from the second location (4) and a hole (29) in the area (26) of the second arm (22) of the second shear element (20) facing away from the first location (2), and that the holes are arranged flush in relation to one another and an attachment splint is pushed into the holes.

12. Method according to claim 10, **characterised in that** the latching element (30) is embodied as a latching lever, and that the latching lever (30) latches in a form fit into a latching projection (28) provided in an area (26) of the second arm (22) facing away from the first location (2).

## Revendications

1. Élément d'assemblage (1) destiné à fixer au moins deux éléments de construction (6, 7) l'un sur l'autre, présentant un premier et un deuxième élément de cisaillement (10, 20) disposés l'un sur l'autre de manière mobile en rotation et/ou en pivotement à un premier endroit (2), chaque élément de cisaillement (10, 20) présentant une première branche (11, 21) conçue en forme d'arc et une deuxième branche (12, 22) disposée angulairement par rapport à la première branche (11, 21),
le premier endroit (2) étant prévu dans la zone de transition (13, 23) de la première (11, 21) à la deuxième branche (12, 22) de chaque élément de cisaillement (10, 20),
les deuxièmes branches (12, 22) présentant chacune une surface de butée (14, 24) destinée à venir buter contre l'un des éléments de construction à assembler (6),
la largeur (11b, 21b) des premières branches (11, 21) conçues en forme d'arc diminuant de manière constante en direction de leurs extrémités libres (15, 25) opposées au premier endroit (2),
les deux premières branches (11, 21) conçues en forme d'arc des deux éléments de cisaillement (10, 20) étant pliées en relation l'une par rapport à l'autre dans des directions de rotation et/ou de pivotement différentes,
sur une partie (16) opposée au premier endroit (2) de la deuxième branche (12) du premier élément de cisaillement (10) étant disposé de manière mobile en rotation et/ou en pivotement un élément de blocage (30), conçu pour être fixé sur une partie (26) opposée au premier endroit (2) de la deuxième branche (22) du deuxième élément de cisaillement (20).

2. Élément d'assemblage (1) selon la revendication 1, **caractérisé en ce que** le premier endroit (2) est formé par un premier axe de rotation (3) sur lequel les éléments de cisaillement (10, 20) sont montés de manière mobile.

3. Élément d'assemblage (1) selon la revendication 1 ou 2, **caractérisé en ce que** l'élément de blocage (30) est conçu comme levier de blocage, monté de manière mobile en rotation et/ou en pivotement à un deuxième endroit (4), ledit deuxième endroit (4) étant prévu dans la partie (16) opposée au premier endroit (2) de la deuxième branche (12) du premier élément de cisaillement (10).

4. Élément d'assemblage (1) selon la revendication 3, **caractérisé en ce que** le deuxième endroit (4) est formé par un deuxième axe de rotation (5) sur lequel l'élément de blocage (30) est monté de manière mobile.

5. Élément d'assemblage (1) selon l'une des revendications précédentes 1 à 4, **caractérisé en ce qu'**en vue de la fixation de l'élément de blocage (30) sur la partie (26) opposée au premier endroit (2) de la deuxième branche (22) du deuxième élément de cisaillement (20), il est prévu un perçage dans la partie (31) opposée au deuxième endroit (4) de l'élément de blocage (30) et un perçage (29) dans la partie (26) opposée au premier endroit (2) de la deuxième branche (22) du deuxième élément de cisaillement (20), et **en ce qu'**il est prévu une goupille de fixation, apte à être engagée à travers les perçages pouvant être disposés en alignement l'un par rapport à l'autre.

6. Élément d'assemblage (1) selon l'une des revendications précédentes 1 à 5, **caractérisé en ce qu'**en vue de la fixation de l'élément de blocage (30) sur la partie (26) opposée au premier endroit (2) de la deuxième branche (22), il est prévu un élément de fixation ou une saillie d'enclenchement (28).

7. Élément d'assemblage (1) selon l'une des revendications précédentes 1 à 6, **caractérisé en ce que** dans la zone de transition (13, 23) des premières et des deuxièmes branches (11, 21 ; 12, 22) des éléments de cisaillement respectifs (10, 20), les axes médians de chaque première et de chaque deuxième branche (11, 21 ; 12, 22) s'étendent l'un par rapport à l'autre selon un angle de 85° à 95°, les axes médians des premières branches (11, 21) présentant en direction de l'extrémité libre (15, 25) une trajectoire courbe.

8. Élément d'assemblage (1) selon l'une des revendications précédentes 1 à 7, **caractérisé en ce qu'**au moins un troisième élément de cisaillement est disposé de manière mobile en rotation et/ou en pivotement par rapport au premier et au deuxième élément de cisaillement (10, 20) au premier endroit (2), ledit au moins troisième élément de cisaillement présentant une première branche conçue en forme d'arc et une deuxième branche disposée angulairement par rapport à la première branche.

9. Élément d'assemblage (1) selon l'une des revendications précédentes 1 à 8, **caractérisé en ce que** les premières branches (11, 21) des éléments de cisaillement (10, 20) présentent une trajectoire en forme de croissant.

10. Procédé de fixation d'au moins deux éléments de construction l'un sur l'autre par un élément d'assemblage (1) selon l'une des revendications 1 à 9, **caractérisé par** les étapes suivantes :
- on place les extrémités libres (15, 25) des premières branches (11, 21) du premier et du deuxième élément de cisaillement (10, 20) l'une sur l'autre et on les introduit à travers des orifices (6a, 7a) disposés en alignement, ménagés dans lesdits au moins deux éléments de construction (6, 7),
- on insère l'élément d'assemblage (1) à travers les orifices (6a, 7a) disposés en alignement jusqu'à ce que les surfaces de butée (14, 24) des deuxièmes branches (12, 22) des éléments de cisaillement (10, 20) viennent buter contre l'un des éléments de construction à assembler (6) et les parties sortant des orifices (6a, 7a) des éléments de construction (6, 7) des premières branches (11, 21) des éléments de cisaillement (10, 20), grâce à leur écartement, viennent fixer l'élément d'assemblage (1) par concordance de forme sur l'orifice (7a) dudit au moins un deuxième élément de construction (7),
- on fixe l'élément de blocage (30), disposé de manière mobile en rotation et/ou en pivotement sur la deuxième branche (12) du premier élément de cisaillement (10), sur la partie (26) opposée au premier endroit (2) de la deuxième branche (22) du deuxième élément de cisaillement (20).

11. Procédé selon la revendication 10, **caractérisé en ce que** l'élément de blocage (30) est conçu comme levier de blocage, ledit levier de blocage (30) présentant un perçage dans la partie (31) opposée au deuxième endroit (4) de l'élément de blocage (30) et un perçage (29) étant prévu dans la partie (26) opposée au premier endroit (2) de la deuxième branche (22) du deuxième élément de cisaillement (20), et **en ce que** l'on dispose les perçages en alignement l'un par rapport à l'autre et on engage une goupille de fixation à travers les perçages.

12. Procédé selon la revendication 10, **caractérisé en ce que** l'élément de blocage (30) est conçu comme levier de blocage, et **en ce que** ledit levier de blocage (30) s'enclenche par concordance de forme sur une saillie d'enclenchement (28) prévue sur la partie (26) opposée au premier endroit (2) de la deuxième branche (22).
